# EUROPEAN PATENT APPLICATION

(11) **EP 4 503 315 A1**
(43) Date of publication of application: **05.02.2025**
(21) Application number: 22934291.0
(22) Date of filing: 31.03.2022
(51) Int. Cl.: H01M 50/519, H01M 50/516, H01M 50/502

(54) **BATTERY MODULE, MANUFACTURING METHOD FOR BATTERY MODULE, BATTERY PACK AND ELECTRIC DEVICE**

(71) Applicant: Ningde Amperex Technology Limited, Ningde, Fujian 352100 (CN)
(72) Inventor: PENG, Fanggui, Ningde, Fujian 352100 (CN); ZHU, Ning, Ningde, Fujian 352100 (CN); YANG, Dian, Ningde, Fujian 352100 (CN); HU, Chengdong, Ningde, Fujian 352100 (CN)
(74) Representative: Icosa
(86) International application number: PCT/CN2022/084691
(87) International publication number: WO 2023/184454

(57) **Abstract**

A battery module (10) includes a cell pack (1), a first structure (2), and a first wiring harness (40), where the cell pack (1) includes a plurality of cells (11); the first structure (2) includes a first surface (210) facing the cell pack (1), and a second surface (220) facing away from the first surface (210); the first structure (2) further includes a first conductor (4) disposed on the second surface (220) and electrically connected to the cell pack (1); when viewed along a first direction (Z) perpendicular to the second surface (220), the first structure (2) has a portion overlapping with the cell pack (1); when viewed along the first direction (Z), the first structure (2) includes a first region (230) connected to the cell pack (1), and the first conductor (4) is disposed between a first end surface (240) of the first structure (2) and the first region (230); and the first wiring harness (40) is connected to the first conductor (4).

## Description

### TECHNICAL FIELD

This application relates to the technical field of electrochemical apparatuses, and in particular, to a battery module, a manufacturing method of battery module, a battery pack, and an electric device.

### BACKGROUND

Due to characteristics such as high energy density, large cycle count, and long storage duration, secondary batteries are widely used in electric devices such as electric vehicles, electric cars, smart storage devices, and drones.

In the related art, a battery includes a battery module and a circuit board. The circuit board is electrically connected to multiple cells within the battery module. The circuit board can collect voltage values of each cell, and transmit the collected voltage values through a first conductive element or the like. However, the connection stability between the circuit board and the first conductive element is relatively low, and the wiring complexity of the first conductive element is high, thus affecting the service life of the battery.

### SUMMARY

Some embodiments of this application are intended to provide a battery module, a manufacturing method of battery module, a battery pack, and an electric device, so as to improve connection stability between a first conductive element and a circuit board in the battery module, reduce wiring complexity of the first conductive element, and enhance service life of the battery.

A first aspect of an embodiment of this application provides a battery module. The battery module includes a cell pack, a first structure, and a first wiring harness, where the cell pack includes a plurality of cells; the first structure includes a first surface facing the cell pack and a second surface facing opposite from the first surface; the first structure further includes a first conductor disposed on the second surface and electrically connected to the cell pack; when viewed along a first direction perpendicular to the second surface, the first structure has a portion overlapping with the cell pack; and when viewed along the first direction, the first structure includes a first region connected to the cell pack, and the first conductor is disposed between a first end surface of the first structure and the first region; and the first wiring harness is connected to the first conductor.

In the battery module provided in the embodiment of this application, the first conductor is disposed between the first end surface and the first region, and a connection end of the first wiring harness is disposed between the first end surface and the first region. After the first conductor and the first wiring harness are electrically connected to the first structure, they can be directly led out from a side edge of the first structure, reducing the wiring complexity and improving the service life of the battery. Moreover, placing the first conductor between the first end surface and the first region can increase the design flexibility of the first wiring harness, improve the service life of the battery, and enhance the space utilization of the battery module.

In some embodiments, the first structure is provided with a plurality of first through holes, an electrode terminal of the cell runs through the first through hole and is disposed on the second surface, and the first region includes a second region surrounded by the plurality of first through holes.

In some embodiments, the first structure is provided with a first notch and a plurality of first through holes, an electrode terminal of the cell runs through the first through hole and the first notch and is disposed on the second surface, and the first notch and the plurality of first through holes 260 form the first region.

In some embodiments, the battery module further includes a first connector connected to the first wiring harness. The first connector is configured to lead out an electrical signal of the cell pack through the first wiring harness and can electrically connect the cell pack to another structural component through the first wiring harness.

In some embodiments, the battery module further includes a second wiring harness, and the second wiring harness is electrically connected to the cell pack. When viewed along the first direction, the second wiring harness and the first connector are spaced apart from each other, reducing the impact of the second wiring harness on the first connector.

In some embodiments, the first structure further includes a second conductor disposed on the second surface and electrically connected to the cell pack, and a third wiring harness connected to the second conductor, where when viewed along the first direction, the second conductor is disposed between a second end surface of the first structure and the first region, the second end surface and the first end surface are disposed opposite to each other. After the second conductor and the third wiring harness are electrically connected to the first structure, they can be directly led out from the side edge of the first structure, further reducing the wiring complexity of the battery module, and improving the service life of the battery. Placing the second conductor between the second end surface and the first region can increase the design flexibility of the third wiring harness and further enhance the space utilization of the battery module.

In some embodiments, the battery module further includes a second connector connected to the third wiring harness. The second connector leads out an electrical signal of the cell pack through the third wiring harness and can electrically connect the cell pack to another structural component through the third wiring harness.

In some embodiments, when viewed along the first direction, the second connector has a portion overlapping with the first connector in a third direction parallel to an extension direction of the first end surface, making it easier for the second connector and the first connector to electrically connect to other structural components, further reducing the wiring complexity of the battery module, and reducing the space occupancy of the second connector and the first connector, thus providing more wiring space for the battery module.

In some embodiments, when viewed along the first direction, in a second direction perpendicular to the first end surface, the first connector is positioned closer to the first end surface than a center of the first structure. This can increase the wiring space between a first center line and the second end surface in the second direction, increase the design flexibility of the wiring in a region between the first center line and the second end surface, and further reduce the wiring complexity.

In some embodiments, when viewed along the first direction, in the second direction, the first connector is positioned closer to the first end surface than a center between the center of the first structure and the first end surface, further increasing the design flexibility of the wiring in the region between the first center line and the second end surface, and further reducing the wiring complexity.

In some embodiments, when viewed along the first direction, the second wiring harness runs through the center of the first structure in the second direction and the first connector are spaced apart from each other, reducing the impact of the second wiring harness on the first connector.

In some embodiments, the battery module further includes a second structure, where the second structure includes a third surface facing the second surface and a fourth surface facing away from the third surface; the second structure includes a first opening; when viewed along the first direction, the first opening overlaps with the first conductor; and the first wiring harness extends from the first opening to the fourth surface. After connected to the first conductor, the first wiring harness can be led out from the first opening which is located above the first conductor along the first direction. This can reduce the bending degree of the first wiring harness when it is led out from the second structure, and lower the bending stress after the first wiring harness is connected to the first conductor, thus reducing the probability of the first wiring harness disconnecting from the first structure, and further reducing the probability of battery failure.

In some embodiments, the second structure includes a second opening; where when viewed along the first direction, the second opening overlaps with the second conductor, and the third wiring harness extends from the second opening to the fourth surface. This can reduce the bending degree of the third wiring harness when led out from the second structure, and lower the bending stress after the third wiring harness is connected to the second conductor, thus reducing the probability of the third wiring harness disconnecting from the first structure, and further reducing the probability of battery failure.

In some embodiments, the first wiring harness transmits a signal from the cell pack, and the second wiring harness conducts power from the cell pack.

In some embodiments, the first structure is provided with an encryption chip, the first wiring harness is electrically connected to the encryption chip, and the first wiring harness is further configured to output a signal from the encryption chip.

In some embodiments, along the second direction, a distance between the first conductor and the first end surface is L1, and L1 ranges from 4 mm to 12 mm, facilitating the connection between the first conductor and the first wiring harness, and facilitating the bending of the first wiring harness.

In some embodiments, L1 ranges from 6 mm to 10 mm, further enhancing the space utilization of the first structure.

In some embodiments, along the second direction, a length of the first structure is L3, and L3 ranges from 100 mm to 400 mm, facilitating the connection between the cell pack and the first structure.

In some embodiments, L3 ranges from 200 mm to 350 mm, further enhancing the volume utilization of the battery module.

In some embodiments, L1/L3 ranges from 1/100 to 3/25, improving the utilization of the first structure, saving space, and facilitating layout of other electronic components.

In some embodiments, L1/L3 ranges from 1/60 to 1/20, facilitating the welding of the first conductor and the first wiring harness.

In some embodiments, along the second direction, a distance between the second conductor and the second end surface is L2, and L2 ranges from 4 mm to 12 mm, facilitating the connection between the second conductor and the third wiring harness, and facilitating the bending of the third wiring harness.

In some embodiments, L2 ranges from 6 mm to 10 mm, further enhancing the space utilization of the first structure.

In some embodiments, L2/L3 ranges from 1/100 to 3/25, improving the utilization of the first structure, saving space, and facilitating layout of other electronic components.

In some embodiments, L2/L3 ranges from 1/60 to 1/20, facilitating the welding of the second conductor and the third wiring harness.

In some embodiments, the second structure has an accommodation cavity, and the first structure and at least part of the cell pack are placed in the accommodation cavity.

The battery module further includes a first insulation layer, the first insulation layer is formed by arranging and fixing a first insulating material in the accommodation cavity, and the first insulation layer bonds and fixes the first structure to the cell pack. During the curing process, the first insulating material can fix the first structure and part of the cell pack placed in the accommodation cavity, so that the cell pack and the first structure are relatively fixed.

In some embodiments, the cell includes a cell housing and an electrode terminal extending from inside of the cell housing to outside of the cell housing; the second structure includes a first wall disposed opposite to the first structure along the first direction; part of the electrode terminal and the cell housing are located in the accommodation cavity, and the first insulation layer bonds and fixes the part of the electrode terminal and the cell housing to the first structure. This can restrict internal parts of the cell from breaking through the sealing region of the cell in the case of vibration or drop, improving the product performance of the cell.

In some embodiments, the second structure includes the first wall, a second wall and a third wall disposed along the third direction, and a fourth wall and a fifth wall disposed along the second direction, where the second wall, the third wall, the fourth wall, the fifth wall, and the first wall form the accommodation cavity.

In some embodiments, the cell includes an electrode assembly, a cell housing, and an electrode terminal connected to the electrode assembly and extending out of the cell housing, where the cell housing includes a first component for accommodating the electrode assembly and a second component extending outward from the first component, and the electrode terminal extend out of the cell housing from the second component.

The first structure is provided with a plurality of first through holes, and the electrode terminal of the cell runs through the first through holes to connect to the first structure.

In some embodiments, the first structure includes a plurality of conductive sheets, and the conductive sheets are disposed on the second surface.

In some embodiments, along the first direction, a projection of the first opening at least partially overlaps with a projection of at least one of the first through holes. During injection of an insulating material into the second structure, the insulating material can quickly enter between the first structure and the first wall through the plurality of first through holes, allowing the electrode terminal of the cell to be quickly fixed to the first structure.

In some embodiments, the second structure further includes a first protrusion, the first protrusion is disposed on a side of the first wall far away from the cell pack, and the first protrusion surrounds the first opening. When the first wiring harness is led out from the first opening, the first protrusion can guide the first wiring harness.

In some embodiments, the second wall is provided with a third recess, the third recess communicates with the first opening, and the third recess extends to the first protrusion; and the second structure further includes a first insulating element covering the third opening. The third recess provides a space for bending of the first wiring harness, reducing the pressure of the second wall and the first protrusion on the first wiring harness, further lowering the probability of the first wiring harness disconnecting from the first conductor, and facilitating the installation of the first wiring harness.

In some embodiments, the third recess extends through the second wall along the second direction.

In some embodiments, the second structure includes an insulating material, and the second structure is integrally injection-molded through the insulating material.

In some embodiments, the first insulating element is acetate cloth.

In some embodiments, the first wall is provided with a first recess, the first recess includes a third region, and the third region abuts against the first structure. The first recess can occupy part of the space in the accommodating groove, reducing the amount of the insulating material to be injected and lowering the costs. Moreover, the plurality of first recesses can restrict the flow direction of the insulating material, and accelerate the flow speed of the insulating material, allowing the first insulating material to quickly fix the first structure.

In some embodiments, along the first direction, a gap is present between a projection of the protrusion and a projection of the third region in the third direction. The gap reserves a channel for the insulating material, and the first insulating material can enter the gap and is then cured, implementing further fixation of the first wiring harness.

In some embodiments, along the third direction, a width of the gap is 1 mm to 2 mm.

In some embodiments, the battery module further includes a second insulation layer, and the second insulation layer covers the first opening and the second opening. The second insulation layer is used to seal the first opening and the second opening, reducing the probability of the first insulating material flowing out of the first opening and the second opening, decreasing the waste of the first insulating material, and lowering the production costs.

In some embodiments, the second insulation layer includes a sealant.

In some embodiments, the first insulation layer includes a first portion, and the first portion is located between the second components. The first portion can fix the electrode terminal led out from the second component. Arranging the first insulation layer between the second components of the cell can restrict the internal parts of the cell from breaking through the sealing region of the cell in the case of vibration or drop, improving the product performance of the cell.

In some embodiments, the battery module further includes a detecting element, and the detecting element is fixed to a surface of the first insulation layer far away from the first wall. Arranging the detecting element on the first insulation layer allows the first insulation layer to evenly dissipate heat from the plurality of cells, making the collection results of the detecting element more accurate.

In some embodiments, a second recess is disposed on the second wall and/or the third wall of the second structure, and a transmission cable of the detecting element is led out through the second recess.

In some embodiments, a thermal conductivity of the first insulation layer is 0.3 w/m.k.

A second aspect of an embodiment of this application provides a manufacturing method of battery module. The manufacturing method includes:
providing a first structure and a cell pack, and connecting the first structure to the cell pack, where the cell pack includes a plurality of cells; the first structure includes a first surface facing the cell pack, and a second surface facing away from the first surface; the first structure further includes a first conductor disposed on the second surface and electrically connected to the cell pack; when viewed along a first direction perpendicular to the second surface, the first structure has a portion overlapping with the cell pack; and when viewed along the first direction, the first structure includes a first region connected to the cell pack, and the first conductor is disposed between a first end surface of the first structure and the first region;
providing a first wiring harness, and connecting the first wiring harness to the first conductor;
providing a second structure, where the second structure has an accommodation cavity;
connecting the second structure to the first structure and the cell pack, so that the first structure and the cell pack are at least partially placed in the accommodation cavity;
inverting the cell pack, the first structure, and the second structure, and injecting a first insulating material into the accommodation cavity and between the first structure and the cell pack; and
curing the first insulating material to form a first insulation layer.

In the battery module made using the manufacturing method of battery module in the embodiment of this application, the first structure is located in the accommodation cavity of the second structure, and the first conductor is located between the first region and the first end surface. After the first wiring harness is connected to the first conductor, the first wiring harness connected to the first conductor can be directly led out from a side surface of the second structure, making the lead-out path of the first wiring harness relatively short and the wiring less complex. Moreover, the first insulation layer is formed by injecting the first insulating material into the accommodation cavity and between the first structure and the cell pack and then curing the first insulating material. In the embodiment of this application, after the first wiring harness is welded to the first conductor, the first insulating material is injected into the accommodation cavity and between the first structure and the cell pack. The first insulation layer formed after the first insulating material is cured can fix the cell pack and the first structure. The first insulation layer in the accommodation cavity can further fix and connect the first wiring harness and the first conductor, enhancing the connection stability between the first wiring harness and the first structure, and reducing the probability of battery failure.

In some embodiments, after the curing the first insulating material to form a first insulation layer, the method further includes:
placing a detecting element between the cells, with the detecting element placed on the first insulation layer.

In some embodiments, the method further includes: injecting the first insulating material between the plurality of cells. This can improve the injection efficiency of the first high insulating material and reduce the injection time.

In some embodiments, before the placing a detecting element between the cells, the method further includes:
wrapping the detecting element with a thermal conductive material. This further improves the detection accuracy of the temperature sensor.

An embodiment of a third aspect of this application provides a battery pack including a housing and the battery module according to any one of the above embodiments or a battery module obtained using the manufacturing method of battery module according to any one of the above embodiments, where the battery module is placed in the housing.

An embodiment of a fourth aspect of this application provides an electric device, where the electric device includes the foregoing battery pack.

In the battery module provided in the embodiment of this application, the first conductor is disposed between the first end surface and the first region, and a connection end of the first wiring harness is disposed between the first end surface and the first region. After the first conductor and the first wiring harness are electrically connected to the first structure, they can be directly led out from the side edge of the first structure, reducing the wiring complexity and improving the service life of the battery. Moreover, placing the first conductor between the first end surface and the first region can increase the design flexibility of the first wiring harness, improve the service life of the battery, and enhance the space utilization of the battery module.

### BRIEF DESCRIPTION OF DRAWINGS

To more clearly illustrate the technical solutions of some embodiments of this application and the prior art, the following is a brief introduction to the drawings required for the embodiments and the prior art. It is obvious that the drawings described below are merely some embodiments of this application, and those skilled in the art can derive other embodiments from these drawings.
FIG. 1 is a schematic structural diagram of a battery pack according to some embodiments of this application;
FIG. 2 is an exploded structural diagram of a battery pack according to some embodiments of this application;
FIG. 3 is a schematic structural diagram of a battery module according to some embodiments of this application;
FIG. 4 is a top view of a battery module according to some embodiments of this application;
FIG. 5 is a side view of a battery module according to some embodiments of this application;
FIG. 6 is a front view of a battery module according to some embodiments of this application;
FIG. 7 is another top view of a battery module according to some embodiments of this application;
FIG. 8 is another schematic structural diagram of a battery module according to some embodiments of this application;
FIG. 9 is a top view of a cell pack and a second structure according to some embodiments of this application;
FIG. 10 is a side view of a first structure according to some embodiments of this application;
FIG. 11 is a top view of a first structure according to some embodiments of this application;
FIG. 12 is a schematic structural diagram of a cell pack according to some embodiments of this application;
FIG. 13A is a schematic structural diagram of a first structure according to some embodiments of this application;
FIG. 13B is another schematic structural diagram of a first structure according to some embodiments of this application;
FIG. 14 is an exploded structural diagram of a battery module according to some embodiments of this application;
FIG. 15 is a schematic structural diagram of a second structure according to some embodiments of this application;
FIG. 16 is a schematic structural diagram of a cell according to some embodiments of this application;
FIG. 17 is a top view of a second structure according to some embodiments of this application;
FIG. 18 is a partial schematic structural diagram of a battery module according to some embodiments of this application;
FIG. 19 is still another top view of a battery module according to some embodiments of this application;
FIG. 20 is a cross-sectional view along direction B-B in FIG. 19;
FIG. 21 is another schematic structural diagram of a second structure according to some embodiments of this application;
FIG. 22 is another partial schematic structural diagram of a battery module according to some embodiments of this application;
FIG. 23 is an enlarged schematic diagram of region A in FIG. 22;
FIG. 24 is an enlarged schematic diagram of region B in FIG. 17;
FIG. 25 is another enlarged schematic diagram of region B in FIG. 17;
FIG. 26 is an enlarged schematic diagram of region C in FIG. 17;
FIG. 27 is another enlarged schematic diagram of region C in FIG. 17;
FIG. 28 is another side view of a battery module according to some embodiments of this application;
FIG. 29 is an enlarged view of region D in FIG. 27; and
FIG. 30 is a flowchart of a manufacturing method of battery module according to some embodiments of this application.

### DETAILED DESCRIPTION OF EMBODIMENTS

The following clearly describes in detail the technical solutions in some embodiments of this disclosure. Apparently, some described embodiments are only some rather than all of the embodiments of this disclosure. Unless otherwise defined, all technical and scientific terms used herein have the same meanings as commonly understood by those skilled in the art to which this disclosure belongs. The terms used in the specification of this disclosure are merely intended to describe some specific embodiments but not intended to constitute any limitation on this application.

The following describes some embodiments of this disclosure in detail. However, this disclosure may be embodied in many different forms and should not be construed as being limited to some example embodiments set forth herein. Rather, these example embodiments are provided so that this application can be conveyed to those skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more associated items listed. In addition, it should be understood that when an element A is referred to as being "connected to" an element B, the element A may be directly connected to the element B, or an intervening element C may be present therebetween such that the element A and the element B are indirectly connected to each other.

Further, the use of "may" when describing embodiments of this disclosure relates to "one or more embodiments of this disclosure".

The terminology used herein is merely intended to describe some specific embodiments but not intended to constitute any limitation on this disclosure. As used herein, the singular forms are intended to also include the plural forms, unless otherwise clearly stated in the context. It should be further understood that the term "include", when used in this specification, specifies the presence of stated features, numbers, steps, operations, elements, and/or components but does not preclude the presence or addition of one or more other features, numbers, steps, operations, elements, components, and/or combinations thereof.

Spatial related terms such as "above" may be used herein for ease of description to describe the relationship between one element or feature and another element (a plurality of elements) or feature (a plurality of features) as illustrated in the figure. It should be understood that the spatial related terms are intended to include different directions of a device or an apparatus in use or operation in addition to the directions described in the figures. For example, if the device in the figures is turned over, elements described as "over" or "above" other elements or features would then be oriented "beneath" or "below" the other elements or features. Thus, the example term "above" may include both directions of above and below. It should be understood that although the terms first, second, third, and the like may be used herein to describe various elements, components, regions, layers, and/or portions, these elements, components, regions, layers, and/or portions should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of some example embodiments. In this disclosure, the first direction can be any direction in a plane in which the first surface is located.
some embodiments of this disclosure are described in detail below. In absence of conflicts, some following embodiments and features in some embodiments may be combined. To better illustrate the structure of the battery module 10, the structure of the cell pack 1 will be described in conjunction with the X, Y, Z coordinate axes, where the X, Y, Z coordinate axes are perpendicular to each other, and direction Z is defined as a first direction, direction Y as a second direction, direction Y' as an opposite to direction of the second direction, and direction X as a third direction.

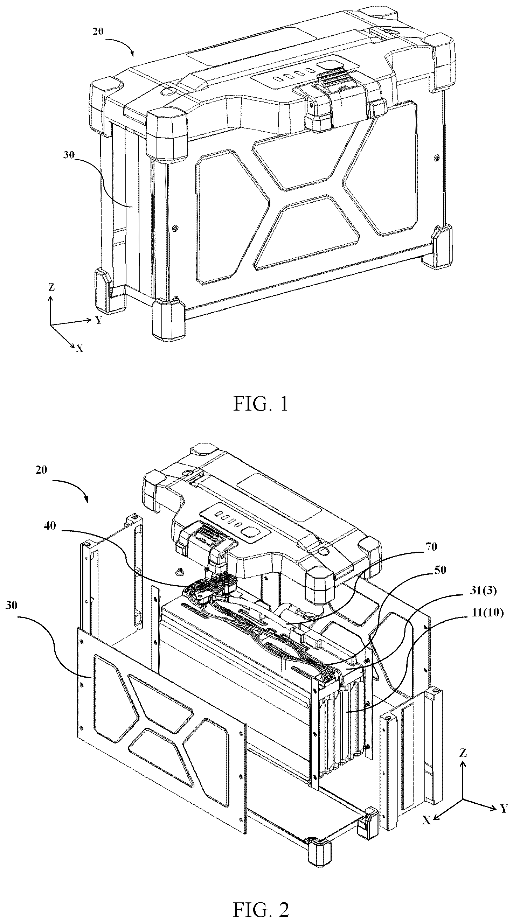

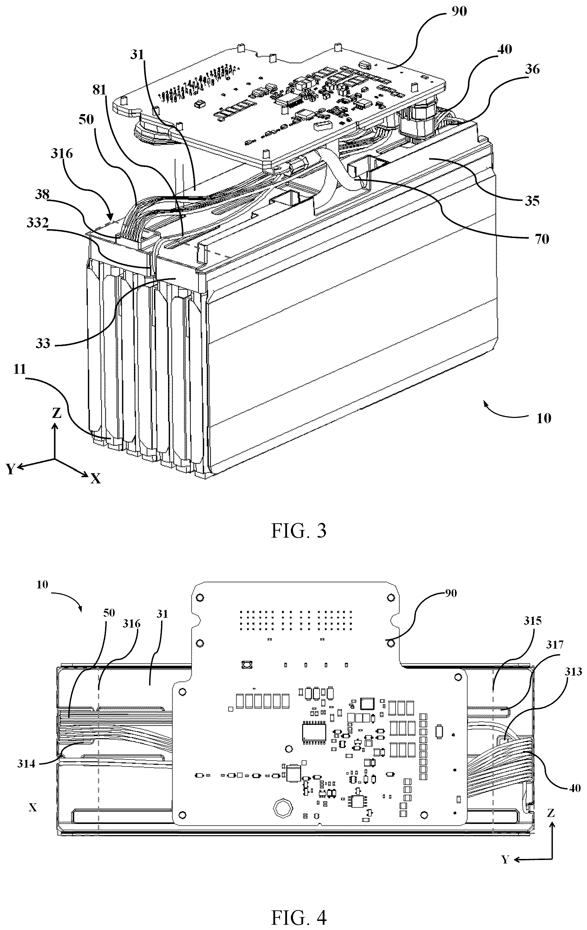

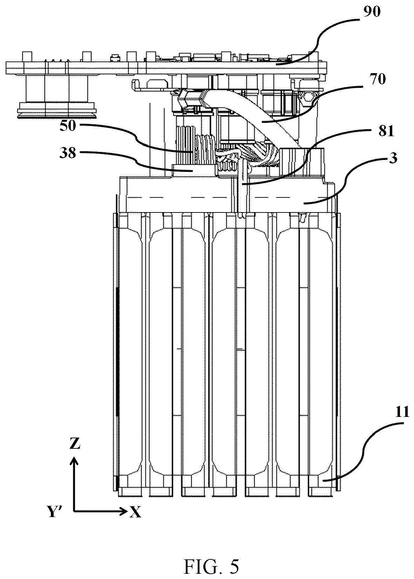

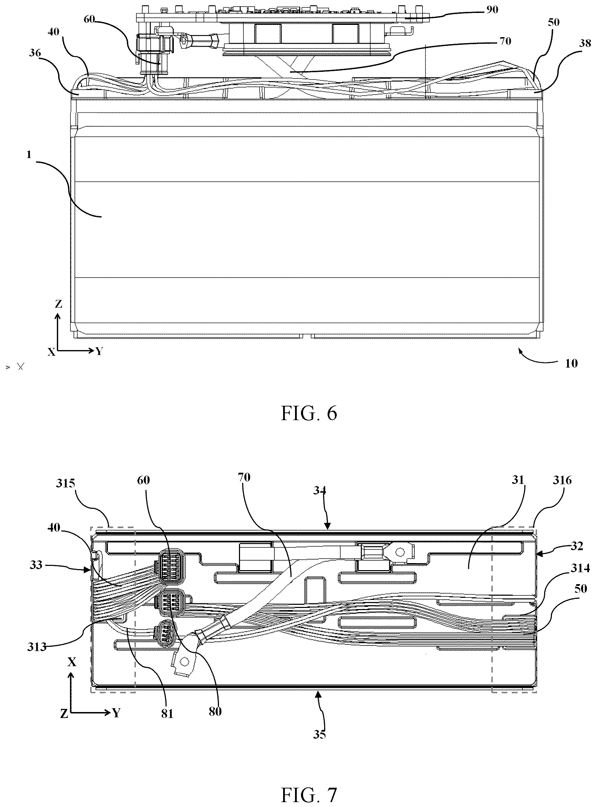

As shown in FIGs. 1 to 6, some embodiments of this application provide a battery pack 20. FIG. 1 is a schematic structural diagram of a battery pack 20 according to some embodiments of this application; FIG. 2 is a exploded schematic structural diagram of a battery pack 20 according to some embodiments of this application; FIG. 3 is a schematic structural diagram of a battery module 10 according to some embodiments of this application; FIG. 4 is a view of a battery module 10 along a first direction Z according to some embodiments of this application; FIG. 5 is a view of a battery module 10 along a second direction Y according to some embodiments of this application; and FIG. 6 is a view of a battery module 10 along a third direction X according to some embodiments of this application. The battery pack 20 provided in this application includes a housing 30 and a battery module 10 disposed in the housing 30. The battery module 10 includes a cell pack 1, a first structure 2, a second structure 3, a first conductor 4, a second conductor 5, a first wiring harness 40 connected to the first conductor 4, and a third wiring harness 50 connected to the second conductor 5.

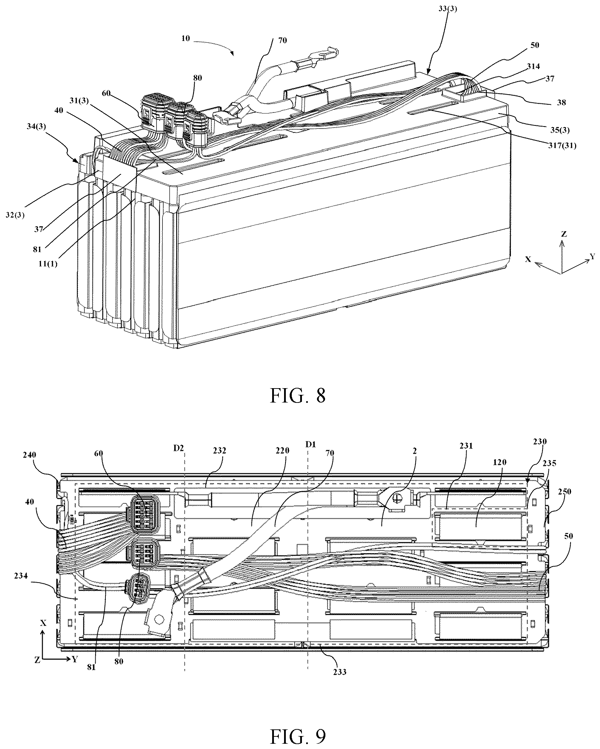

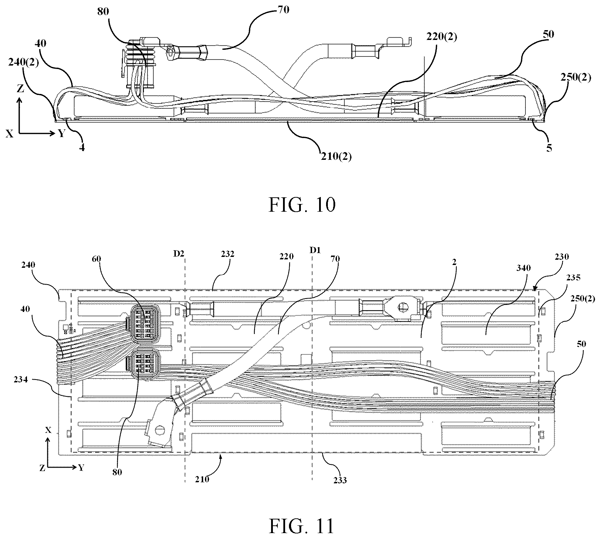

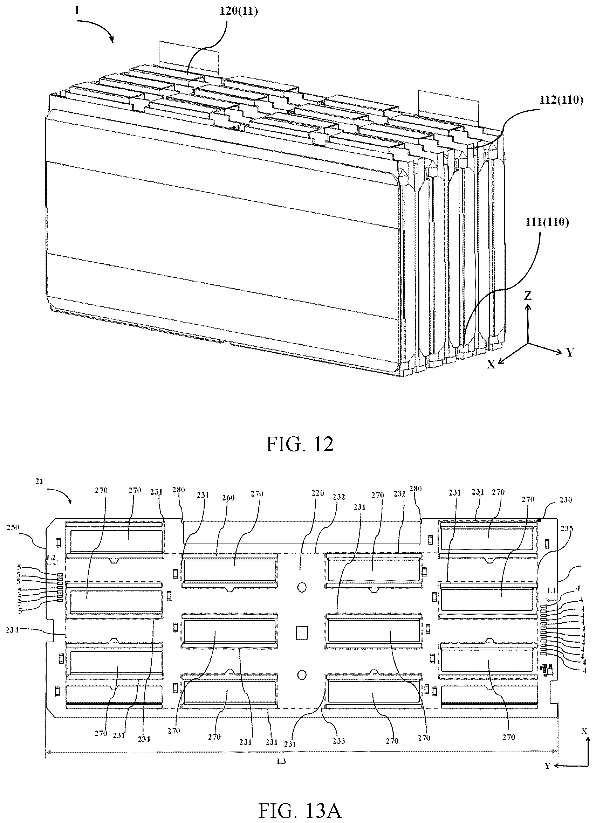

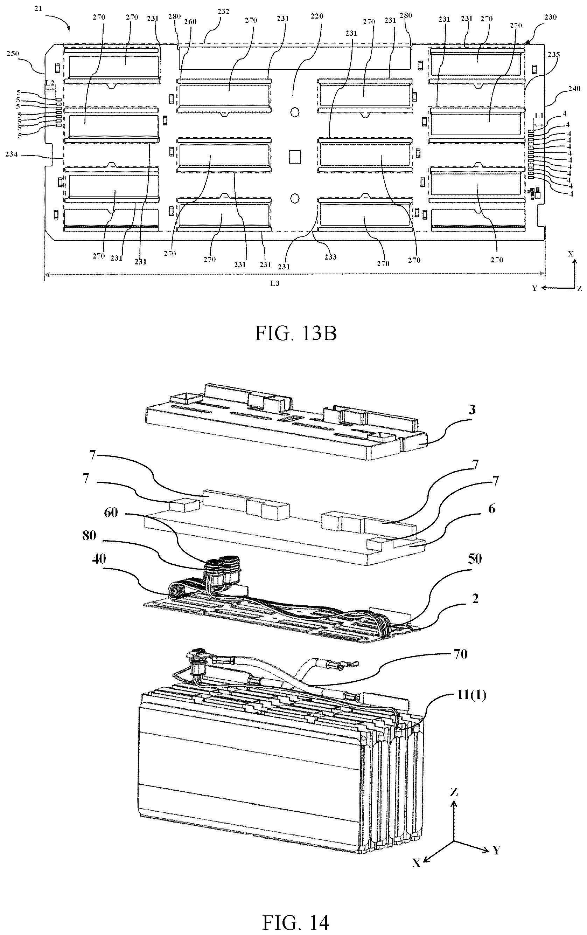

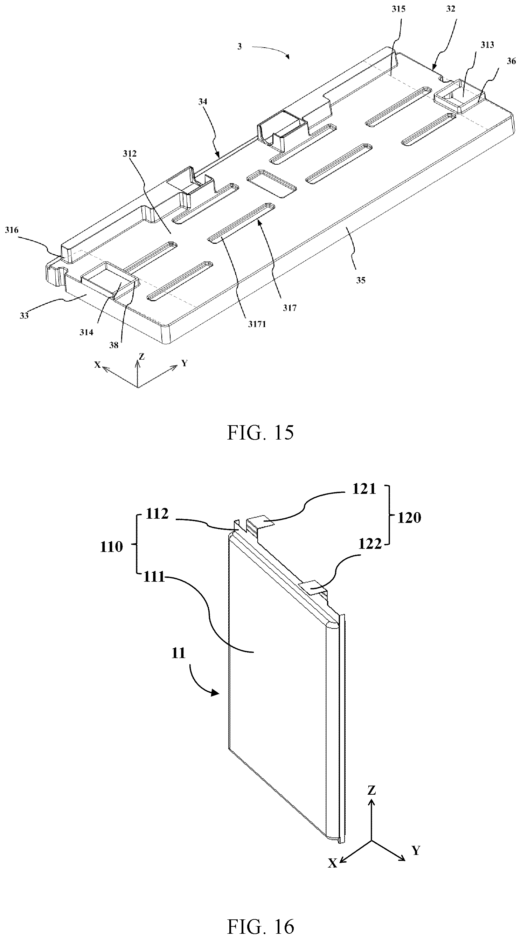

As shown in FIGs. 7 to 16, FIG. 7 is another view of a battery module 10 along a first direction Z according to some embodiments of this application; FIG. 8 is another schematic structural diagram of a battery module 10 according to some embodiments of this application; FIG. 9 is a view of a cell pack 1 and a second structure 3 along a first direction Z according to some embodiments of this application; FIG. 10 is a view of a first structure 2 along a second direction Y according to some embodiments of this application; FIG. 11 is a view of a first structure 2 along a first direction Z according to some embodiments of this application; FIG. 12 is a schematic structural diagram of a cell pack 1 according to some embodiments of this application; FIG. 13a is a schematic structural diagram of a first structure 2 according to some embodiments of this application; FIG. 13b is another schematic structural diagram of a first structure 2 according to some embodiments of this application; FIG. 14 is an exploded structural diagram of a battery module 10 according to some embodiments of this application; and FIG. 16 is a schematic structural diagram of a cell 11 according to some embodiments of this application. As shown in FIGs. 7 to 16, the battery module 10 provided in some embodiments of this application includes a cell pack 1. The cell pack 1 includes a plurality of cells 11 stacked. The third direction X is a stacking direction of the plurality of cells 1. Optionally, the cell 11 includes a cell housing 110, an electrode assembly disposed in the cell housing 110 (not shown in the figure), and an electrode terminal 120 connected to the electrode assembly and extending out of the cell housing 110. The electrode terminal 120 is a structural component that leads positive and negative electrodes of the cell 11 from inside of the cell housing 110. As shown in FIG. 16, the electrode terminal 120 may include a positive electrode tab 121 and a negative electrode tab 122.

In some embodiments, the electrode assembly includes a wound structure formed by a positive electrode plate, a negative electrode plate, and a separator between the positive electrode plate and the negative electrode plate through winding. In some other embodiments, the electrode assembly may alternatively be a laminated structure. Optionally, the positive electrode plate may be connected to the positive electrode tab 121 by welding or the like, and the negative electrode plate may be connected to the negative electrode tab 122 by welding or the like.

Further, the cell housing 110 includes a first component 111 for accommodating the electrode assembly and a second component 112 extending outward from the first component 111, and the electrode terminal 120 extends out of the cell housing 110 from the second component 112. The second component 112 is configured to improve sealing of the cell housing 110.

The battery module 10 further includes a first structure 2 and a second structure 3. The first structure 2 is electrically connected to the plurality of cells 11 in the cell pack 1, and the first structure 2 and part of the cell pack 1 may be located in the second structure 3. The first direction Z is a direction in which the first structure 2 is arranged opposite to the cell housing 110 of the cell 11.

The first structure 2 includes a first surface 210 facing the cell pack 1 and a second surface 220 facing opposite from the first surface 210. The first surface 210 and the second surface 220 are two surfaces of the first structure 2 along the first direction Z. The first structure 2 further includes a first conductor 4 disposed on the second surface 220 and electrically connected to the cell pack 1. The first conductor 4 can be connected to the cell pack 1 through a conductive circuit on the first structure 2.

In some embodiments, as shown in FIG. 13a, when viewed along the first direction Z perpendicular to the second surface 220, the first structure 2 has a portion overlapping with the cell pack 1. when viewed along the first direction Z, the first structure 2 includes a first region 230 connected to the cell pack 1. The first structure 2 is provided with a plurality of first through holes 260, and an electrode terminal 120 of the cell 11 runs through the first through hole 260 and is disposed on the second surface 220. The first region 230 includes a second region 231 surrounded by the plurality of first through holes 260.

In some other embodiments, as shown in FIG. 13b, the first structure 2 is provided with a first notch 280, and the first notch 280 and the plurality of first through holes 260 form the first region 230. The first region 230 includes a first end edge 232 and a second end edge 233 that substantially extend along the second direction Y, and a third end edge 234 and a fourth end edge 235 that substantially extend in the third direction X. The first end edge 232, the third end edge 234, the second end edge 233, and the fourth end edge 235 are connected sequentially to form the first region 230.

Further, as shown in FIGs. 9 and 13a, the first region 230 includes a plurality of second regions 231, and the plurality of second regions 231 are electrically connected to the cell pack 1. As shown in FIG. 9, a gap is present between the second regions 231 adjacent along the second direction Y and the third direction X. The first region 230 includes a plurality of second regions 231 and gaps between the adjacent second regions 231.

Further, the first structure 2 further includes a plurality of conductive sheets 270, and the plurality of conductive sheets 270 are disposed on the second surface 220. The conductive sheet 270 may be a conductive copper sheet, a conductive nickel sheet, or the like. Each second region 231 includes the conductive sheet 270. The second region 231 may be a region formed by conductive sheets 270 arranged along the third direction X and the second direction Y.

In some embodiments of this application, the first structure 2 may be a circuit board 21 or an adapter board electrically connected to the plurality of cells 11. Optionally, the circuit board 21 includes a printed circuit board (Printed circuit boards).

Further, as shown in FIGs. 9 and 13a, the circuit board 21 is provided with a plurality of first through holes 260, and the electrode terminal 120 of the cell 11 runs through the first through hole 260 to connect to the circuit board 21. Further, each second region 231 includes a first conductive sheet 270 and a first through hole 260.

Further, the first structure 2 includes a first end surface 240, and the first end surface 240 is a side end of the first structure 2 along the second direction Y. when viewed along the first direction Z, the first conductor 4 is disposed between the first end surface 240 of the first structure 2 and the first region 230.

Further, an extension direction of the first end surface 240 is parallel to the third direction X, and there may be an error of ±10% between the extension direction of the first end surface 240 and the third direction X.

The first structure 2 further includes a second end surface 250 opposite to the first end surface 240 along the second direction Y. The first structure 2 further includes a second conductor 5 disposed on the second surface 220 and electrically connected to the cell pack 1. when viewed along the first direction Z, the second conductor 5 is located between the second end surface 250 and the first region 230.

Further, as shown in FIG. 9, in an embodiment of this application, as shown in FIG. 13a, when viewed along the first direction Z, the first conductor 4 is located between the first end surface 240 and the first region 230, and the first conductor 4 is located between the fourth end edge 235 and the first end surface 240. Correspondingly, when viewed along the first direction Z, the second conductor 5 is located between the second end surface 250 and the first region 230, and the second conductor 5 is located between the third end edge 234 and the second end surface 250.

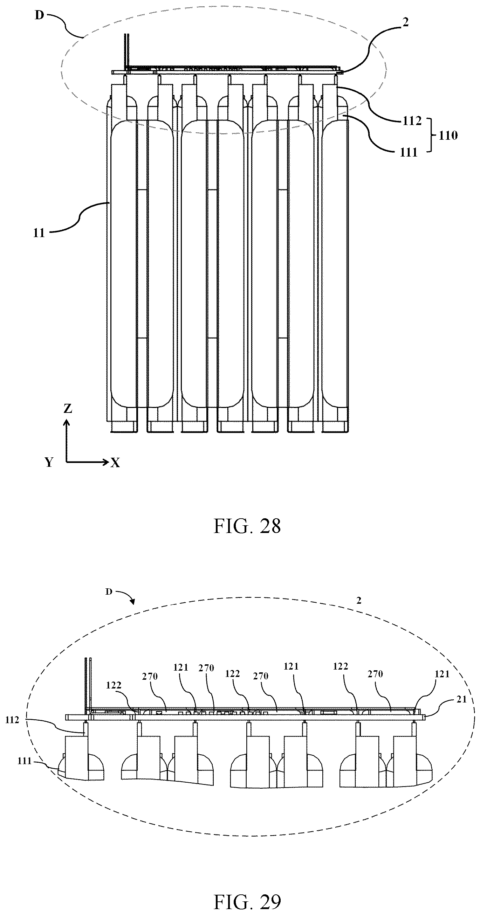

As shown in FIG. 13a, the second surface 220 of the first structure 2 can be provided with a plurality of first conductors 4 and a plurality of second conductors 5, the plurality of first conductors 4 can be arranged in at least one row along the third direction X, and the plurality of second conductors 5 can also be arranged in at least one row along the third direction X. Optionally, the first conductor 4 and the second conductor 5 may be pads integrated on the first structure 2. Further, surfaces of the first conductors 4 and the second conductors 5 may be coated with insulating blue glue. The first conductor 4 and the second conductor 5 may be made of conductive material such as copper, nickel, or aluminum. The electrode terminal 120 of the cell 11 is electrically connected to the first structure 2. Further, when the first structure 2 is a circuit board 21, as shown in FIG. 13a, the electrode terminal 120 of the cell 11 runs through the first through holes 260 to connect to the circuit board 21. Specifically, as shown in FIG. 13a, the circuit board 21 has first through holes 260, and every two of the plurality of first through holes 260 are arranged opposite to each other on two sides of the conductive sheet 270 along the third direction X, so that the two tabs of two adjacent cells 11 along the third direction X run through two first through holes 260 respectively and are lapped on the conductive sheet 270, so as to electrically connect to the circuit board 21. Optionally, as shown in FIG. 13a, the first through hole 260 is a square hole matching the positive electrode tab 121 or the negative electrode tab 122 in shape. Optionally, as shown in FIGs. 28 and 29, FIG. 28 is a view of the battery module 10 along the second direction Y according to some embodiments of this application, and FIG. 29 is an enlarged view of region D in FIG. 28. The positive electrode tab 121 and the negative electrode tab 122 run through the first through holes 260 and lap on the conductive sheet 270 to electrically connect to the circuit board 21. Adjacent cells 11 may be connected in series.

The first surface 210 is arranged opposite to the cell housing 110 of the cell 11; the first direction Z is the direction in which the first structure 2 is arranged opposite to the cell housing 110; the first surface 210 and the second surface 220 are two surfaces of the first structure 2 along the first direction Z.

Further, the battery module 10 further includes a first wiring harness 40 and a third wiring harness 50. The first wiring harness 40 is electrically connected to the first conductor 4. The third wiring harness 50 is electrically connected to the second conductor 5. The first wiring harness 40 and the third wiring harness 50 may be flat cables, and the number of connection ends of the flat cables may correspond to the number of first conductors 4 and second conductors 5. A connection manner of the first wiring harness 40 and the first conductor 4 includes but is not limited to welding. A connection manner of the third wiring harness 50 and the second conductor 5 includes but is not limited to welding.

Further, the first wiring harness 40 and the third wiring harness 50 transmit a signal from the cell pack 1. The first wiring harness 40 and the third wiring harness 50 may be sampling harnesses used for collecting electrical signals such as voltage and current of the cell 11.

Further, the first structure 2 is provided with an encryption chip, the first wiring harness 40 is electrically connected to the encryption chip, and the first wiring harness 40 is further configured to output a signal from the encryption chip.

In some embodiments, along the second direction Y, a distance between the first conductor 4 and the first end surface 240 is L1, and L1 ranges from 4 mm to 12 mm, facilitating the connection between the first conductor 4 and the first wiring harness 40, and facilitating the bending of the first wiring harness 40. Optionally, L1 ranges from 6 mm to 10 mm, further enhancing the space utilization of the first structure 2.

In some embodiments, along the second direction Y, a length of the first structure 2 is L3, and L3 ranges from 100 mm to 400 mm, facilitating the connection between the cell pack 1 and the first structure 2. Optionally, L3 ranges from 200 mm to 350 mm, further enhancing the volume utilization of the battery module 10.

In some embodiments, L1/L3 ranges from 1/100 to 3/25, improving the utilization of the first structure 2, saving space, and facilitating layout of other electronic components. Optionally, L1/L3 ranges from 1/60 to 1/20, facilitating the welding of the first conductor 4 and the first wiring harness 40.

In some embodiments, along the second direction Y, a distance between the second conductor 5 and the second end surface 250 is L2, and L2 ranges from 4 mm to 12 mm, facilitating the connection between the second conductor and the third wiring harness 50, and facilitating the bending of the third wiring harness 50. Optionally, L2 ranges from 6 mm to 10 mm, further enhancing the space utilization of the first structure 2.

In some embodiments, L2/L3 ranges from 1/100 to 3/25, improving the utilization of the first structure 2, saving space, and facilitating layout of other electronic components. Optionally, L2/L3 ranges from 1/60 to 1/20, facilitating the welding of the second conductor 5 and the third wiring harness 50.

In the battery module 10 provided in some embodiments of this application, the first conductor 4 is disposed between the first end surface 240 and the first region 230, and a connection end of the first wiring harness 40 is disposed between the first end surface 240 and the first region 230. The first end surface 240 is a side end of the first structure 2 along the second direction Y. After the first conductor 4 and the first wiring harness 40 are electrically connected to the first structure 2, they can be directly led out from a side edge of the first structure 2, reducing wiring complexity and improving service life of the battery. Moreover, placing the first conductor 4 between the first end surface 240 and the first region 230 can increase the design flexibility of the first wiring harness 40, improve the service life of the battery, and enhance the space utilization of the battery module 10.

Moreover, the second conductor 5 is disposed between the second end surface 250 and the first region 230, and a connection end of the third wiring harness 50 is disposed between the second end surface 250 and the first region 230. The second end surface 250 is also a side end of the first structure 2 along the second direction Y, and is arranged opposite to the first end surface 240 along the second direction Y. After the second conductor 5 and the third wiring harness 50 are electrically connected to the first structure 2, they can be directly led out from the side edge of the first structure 2, further reducing the wiring complexity of the battery module 10, and improving the service life of the battery. Moreover, arranging the second conductor 5 between the second end surface 250 and the first region 230 can increase the design flexibility of the third wiring harness 50 and further enhance the space utilization of the battery module 10.

In some embodiments, as shown in FIGs. 6, 7, 8, 9, 11, and 19, the battery module 10 further includes a first connector 60 connected to the first wiring harness 40, and a second connector 80 connected to the third wiring harness 50. The first connector 60 is configured to lead out an electrical signal of the cell pack 1 through the first wiring harness 40, and can electrically connect the cell pack 1 to another structural component through the first wiring harness 40. The second connector 80 leads out an electrical signal of the cell pack 1 through the third wiring harness 50, and can electrically connect the cell pack 1 to another structural component through the third wiring harness 50.

Further, when viewed along the first direction Z, the second connector 80 has a portion overlapping with the first connector 60 in the third direction X. This makes it easier for the second connector 80 and the first connector 60 to be electrically connected to other structural components, further reducing the wiring complexity of the battery module 10, and reducing the space occupancy of the second connector 80 and the first connector 60, thus providing more wiring space for the battery module 10. For example, as shown in FIG. 3, the first connector 60 and the second connector 80 can be electrically connected to a BMS board 90. The BMS board 90 can be configured to manage charging and discharging of the cell pack 1.

Further, when viewed along the first direction Z, along the third direction X, a distance between the second connector 80 and the first connector 60 is less than a width of the second connector 80 and the first connector 60 along the third direction X. This can reduce the space occupancy of the second connector 80 and the first connector 60, thus providing more wiring space for the battery module 10, and facilitating aggregation of wiring harnesses with similar functions, such as the first wiring harness 40 and the third wiring harness 50, to reduce the wiring complexity of the battery module 10.

When viewed along the first direction Z, in the second direction Y perpendicular to the first end surface 240, the first connector 60 is positioned closer to the first end surface 240 than a center of the first structure 2. When viewed along the first direction Z, along the second direction Y, the second connector 80 is positioned closer to the first end surface 240 than the center of the first structure 2. As shown in FIGs. 9 and 11, along the second direction Y, the first connector 60 and the second connector 80 are disposed closer to the first end surface 240 than a first center line D1 of the first structure 2 along the second direction Y. Having the first connector 60 and the second connector 80 disposed closer to the first end surface 240 can increase the wiring space between the first center line D1 and the second end surface 250 along the second direction Y, and increase the design flexibility of the wiring in a region between the first center line D1 and the second end surface 250, further reducing the wiring complexity.

Further, when viewed along the first direction Z, in the second direction Y, the first connector 60 is positioned closer to the first end surface 240 than a center between the center of the first structure 2 and the first end surface 240. As shown in FIGs. 9 and 11, along the second direction Y, there is a second center line D2 between the first center line D1 and the first end surface 240. Compared to the second center line D2, the first connector 60 is positioned closer to the first end surface 240. This further increases the design flexibility of the wiring in the region between the first center line D1 and the second end surface 250, further reducing the wiring complexity.

Further, when viewed along the first direction Z, in the second direction Y, the second connector 80 is positioned closer to the first end surface 240 than the center between the center of the first structure 2 and the first end surface 240. As shown in FIGs. 9 and 11, along the second direction Y, there is a second center line D2 between the first center line D1 and the first end surface 240. Compared to the second center line D2, the second connector 80 is positioned closer to the first end surface 240. This further increases the design flexibility of the third wiring harness 50, further reducing the wiring complexity.

Further, the battery module 10 further includes a second wiring harness 70, and the second wiring harness 70 is electrically connected to the cell pack 1. As shown in FIGs. 9 and 11, when viewed along the first direction Z, the second wiring harness 70 and the first connector 60 are spaced apart from each other, reducing the impact of the second wiring harness 70 on the first connector 60. Further, the second wiring harness 70 conducts power from the cell pack 1. The second wiring harness 70 may be a power harness in the battery module 10, and the power harness may be connected to the electrode terminals of the plurality of cells 1 in the cell pack 1. Further, when viewed along the first direction Z, the second wiring harness 70 runs through the center of the first structure 2 in the second direction Y and the first connector 60 are spaced apart from each other, further reducing the impact of the second wiring harness 70 on the first connector 60. The second wiring harness 70 runs through the center of the first structure 2 in the second direction Y, and the second wiring harness 70 runs through the first center line D1 of the first structure 2 in the second direction Y.

Further, a diameter of a cross section of the second wiring harness 70 is greater than a diameter of a cross section of each wire in the first wiring harness 40, and the diameter of the cross-section of the second wiring harness 70 is greater than a diameter of a cross section of each wire in the third wiring harness 50. Therefore, the second wiring harness 70 is more difficult to bend than the first wiring harness 40 and the third wiring harness 50.

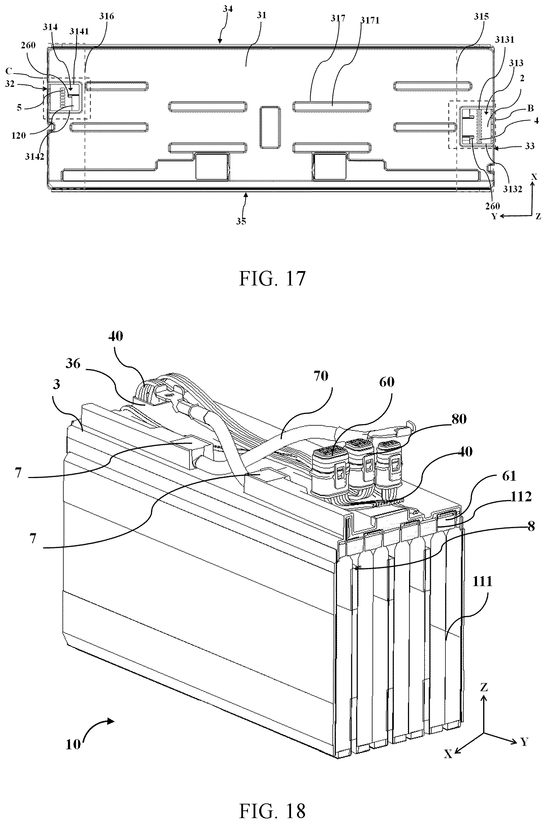

In some embodiments, as shown in FIGs. 15 to 18, FIG. 17 is a view of a second structure 3 along a first direction Z according to some embodiments of this application; and FIG. 18 is a partial schematic structural diagram of a battery module 10 according to some embodiments of this application. The battery module 10 includes a second structure 3, the second structure 3 includes a first wall 31, and along the first direction Z, the first structure 2 is arranged opposite to the first wall 31. The first wall 31 includes a third surface 311 facing the second surface 220 and a fourth surface 312 facing away from the third surface 311. The second structure 3 includes a first opening 313. When viewed along the first direction Z, the first opening 313 overlaps with the first conductor 4. The first wiring harness 40 extends from the first opening 313 to the fourth surface 312. After connected to the first conductor 4, the first wiring harness 40 can be led out from the first opening 313 which is located above the first conductor 4 along the first direction Z. This reduces the bending degree of the first wiring harness 40 when it is led out from the second structure 3, and lowers the bending stress after the first wiring harness 40 is connected to the first conductor 4, thus reducing the probability of the first wiring harness 40 disconnecting from the first structure 2, and further reducing the probability of battery failure.

In some embodiments, the second structure 3 includes an insulating material. Optionally, the second structure 3 is integrally injection-molded through the insulating material.

Further, the second structure 3 further includes a second wall 32 and a third wall 33 disposed opposite to each other along the second direction Y, and a fourth wall 34 and a fifth wall 35 disposed opposite to each other along the third direction X. The first wall 31 is connected to the second wall 32 and the third wall 33 on two sides along the second direction Y, and the first wall 31 is connected to the fourth wall 34 and the fifth wall 35 on two sides along the second direction Y. The second structure 3 has an accommodation cavity 30. The first wall 31, the second wall 32, the third wall 33, the fourth wall 34, and the fifth wall 35 jointly form the accommodation cavity 30. The first structure 2 and at least a part of the cell pack 1 are disposed in the accommodation cavity 30. The accommodation cavity 30 can provide an accommodation space for the first structure 2 and the cell pack 1, allowing the cell pack 1 and the first structure 2 to be connected more stably.

In some embodiments, when viewed along the first direction Z, a projection of the first opening 313 at least partially overlaps with a projection of at least one of the first through holes 260. This can increase area of the first opening 313, reducing the probability of the first opening 313 pressing the first wiring harness 40 when the first wiring harness 40 is led out from the first opening 313. Moreover, during injection of an insulating material into the second structure 3, the insulating material can quickly enter between the first structure 2 and the first wall 31 through the plurality of first through holes 260, enabling the electrode terminal 120 of the cell 11 to be quickly fixed to the first structure 2.

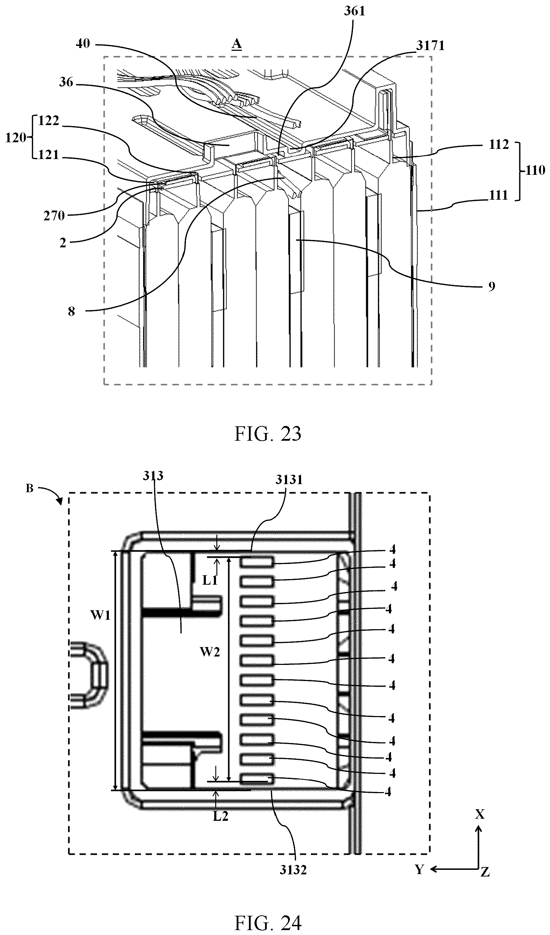

Further, as shown in FIG. 24, FIG. 24 is an enlarged view of region B in FIG. 17. When viewed along the first direction Z, a width W1 of the first opening 313 along the third direction X is greater than a total width W2 of the plurality of first conductors 4 along the third direction, reducing the bending degree of the first wiring harness 40 connected to the plurality of first conductors 4, and improving the service life of the first wiring harness 40. The insulating material such as glue can be injected through the first opening 313 to better bond the plurality of first conductors 4 and the first wiring harness 40 as well as the bonding points of the plurality of first conductors 4.

Further, as shown in FIG. 24, the first opening 313 includes a first edge 3131 and a second edge 3132 that are opposite to along the third direction X. Along the third direction X, there is a first distance L1 between the plurality of first conductors 4 and the first edge 3131, and there is a second distance L2 between the plurality of first conductors 4 and the second edge 3132. The first distance L1 and the second distance L2 are approximately equal, making it easier for the insulating material to flow to two sides of the plurality of first conductors 4 to better bond and fix the plurality of first conductors 4 and the first wiring harness 40. Being approximately equal can be understood as an error of ±5% between the first distance L1 and the second distance L2.

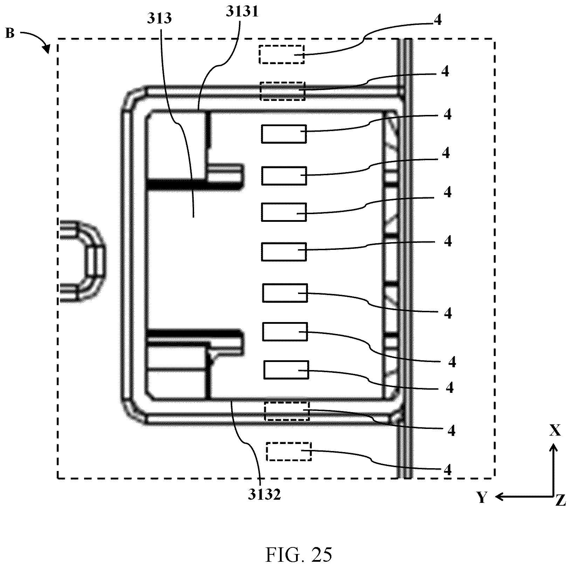

Further, as shown in FIG. 25, FIG. 25 is another enlarged view of region B in FIG. 17. When viewed along the first direction Z, a part of first conductors 4 in the plurality of first conductors 4 is located inside the first opening 313, that is, located between the first edge 3131 and the second edge 3132 along the third direction X, and another part of the first conductors 4 is located outside the first opening 313, that is, located on two sides away from the first edge 3131 and the second edge 3132. This helps to reduce the size of the first opening 313 and reduce the space occupied by the first opening 313, thus increasing the wiring space of the battery module 10.

Further, as shown in FIG. 25, the number of first conductors 4 located inside the first opening 313 is greater than the number of first conductors 4 located outside the first opening 313.

Further, along the first direction Z, the fourth surface 312 covers the first structure 2. The second structure 3 includes a second opening 314. When viewed along the first direction Z, the second opening 314 overlaps with the second conductor 5, and the third wiring harness 50 extends from the second opening 314 to the fourth surface 312. After connected to the first conductor 5, the third wiring harness 50 can be led out from the second opening 314 which is located above the second conductor 5 along the first direction Z. This reduces the bending degree of the third wiring harness 50 when it is led out from the second structure 3, and lowers the bending stress after the third wiring harness 50 is connected to the second conductor 5, thus reducing the probability of the third wiring harness 50 disconnecting from the first structure 2, and further reducing the probability of battery failure.

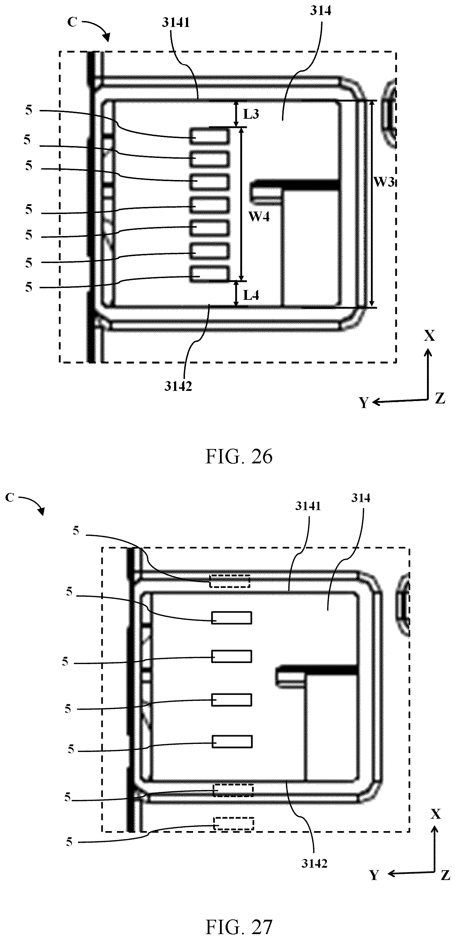

Further, as shown in FIG. 26, FIG. 27 is an enlarged view of region C in FIG. 17. When viewed along the first direction Z, a width W3 of the second opening 314 along the third direction X is greater than a total width W4 of the plurality of second conductors 5 along the third direction, reducing the bending degree of the third wiring harness 50 connected to the plurality of second conductors 5, and improving the service life of the third wiring harness 50. The insulating material such as glue can be injected through the second opening 314 to better bond and fix the plurality of second conductors 5 and the third wiring harness 50.

Still further, as shown in FIG. 26, the second opening 314 includes a third edge 3141 and a fourth edge 3142, the third edge 3141 and the fourth edge 3142 are opposite to each along the third direction X. Along the third direction X, there is a third distance L3 between the plurality of second conductors 5 and the third edge 3141, and there is a fourth distance L4 between the plurality of second conductors 5 and the fourth edge 3142. The third distance L3 and the fourth distance L4 are approximately equal, making it easier for the insulating material such as glue to flow to two sides of the plurality of second conductors 5 to better bond the plurality of second conductors 5 and the third wiring harness 50. Being approximately equal can be understood as an error of ±5% between the third distance L3 and the fourth distance L4.

Further, as shown in FIG. 27, FIG. 27 is another enlarged view of region C in FIG. 17. When viewed along the first direction Z, a part of second conductors 5 in the plurality of second conductors 5 are located inside the second opening 314, that is, located between the third edge 3141 and the fourth edge 3142 along the third direction X, and another part of the second conductors 5 is located outside the second opening 314, that is, located on two sides away from the third edge 3141 and the fourth edge 3142. This helps to reduce the size of the second opening 314 and reduce the space occupied by the second opening 314, thus increasing the wiring space of the battery module 10.

Further, as shown in FIG. 27, the number of second conductors 5 located inside the second opening 314 is greater than the number of second conductors 5 located outside the second opening 314.

In some embodiments, the battery module 10 further includes a first insulation layer 6, the first insulation layer 6 is formed by arranging and fixing a first insulating material in the accommodation cavity 30, and the first insulation layer 6 bonds and fixes the first structure 2 to the cell pack 1. The first insulation layer 6 is formed by injecting the first insulating material into the accommodation cavity 30 of the second structure 3 and curing first insulating material. During the curing process, the first insulating material can fix the structure of the first structure 2 and part of the cell pack 1 in the accommodation cavity 30, so that the cell pack 1 and the first structure 2 are relatively fixed. The first insulating material may be glue, such as polyurethane glue, silicone glue, or potting glue. The first insulating material may alternatively be epoxy resin or the like, which is not specifically limited in some embodiments of this application.

In some embodiments of this application, the first wiring harness 40 is welded to the first conductor 4, the third wiring harness 50 is welded to the second conductor 5, and then the first insulating material is injected into the accommodation cavity 30 and between the first structure 2 and the cell pack 1. The first insulation layer 6 formed after the insulating material is cured can fix the cell pack 1 and the first structure 2. The first insulation layer 6 in the accommodation cavity 30 can further fix and connect the first wiring harness 40 and the first conductor 4, as well as the third wiring harness 50 and the second conductor 5, thus enhancing the connection stability of the first wiring harness 40, the third wiring harness 50, and the first structure 2, and reducing the probability of battery failure.

Further, a part of the electrode terminal 120 and a part of the cell housing 110 are located in the accommodation cavity 30, and the first insulation layer 6 bonds and fixes the part of the electrode terminal 120 and the cell housing 110 to the first structure 2.

In some embodiments, as shown in FIG. 18, the first insulation layer 6 includes a first portion 61, and the first portion 61 is located between the second components 112. The first portion 61 can fix the electrode terminal 120 led out from the second component 132. In addition, arranging the first insulation layer between the second components 132 of the cell 11 can restrict internal parts of the cell 11 from breaking through the sealing region of the cell 11 in the case of vibration or drop, improving the product performance of the cell 11.

In some embodiments, as shown in FIG. 15, the second structure 3 further includes a first protrusion 36, the first protrusion 36 is disposed on a side of the first wall 31 far away from the cell pack 1, and the first protrusion 36 is disposed on the fourth surface 312. The first protrusion 36 is arranged around the first opening 313. When the first wiring harness 40 is led out from the first opening 313, an orthographic projection of the first protrusion 36 overlaps with an orthographic projection of the first wiring harness 40 along the second direction Y. The first protrusion 36 has a certain height. When the first wiring harness 40 is led out from the first opening 313, the first protrusion 36 can guide the first wiring harness 40. Optionally, the first protrusion 36 may be made of a material such as rubber or plastic, and the first protrusion 36 and the first wall 31 may be integrally injection-molded.

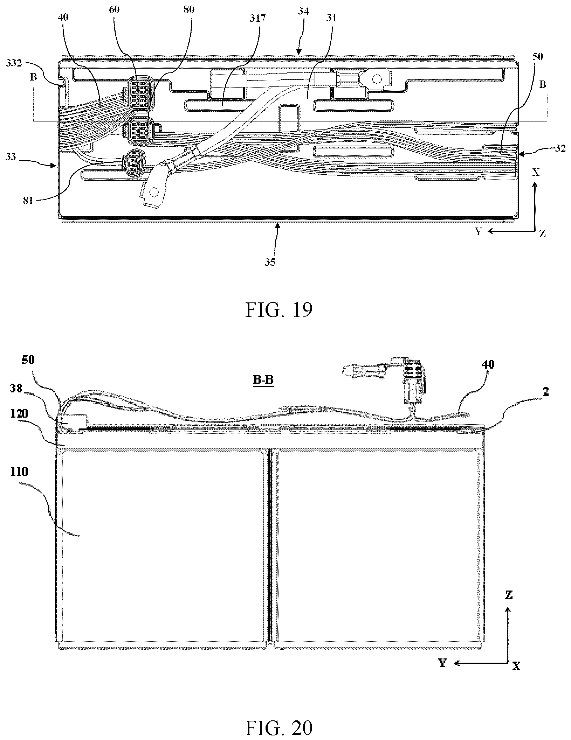

Further, as shown in FIG. 20, the second structure 3 may further include a second protrusion 38, the second protrusion 38 is disposed on the fourth surface 312, and the second protrusion 38 is arranged around the second opening 314. When the third wiring harness 50 is led out from the second opening 314, an orthographic projection of the second protrusion 38 overlaps with an orthographic projection of the third wiring harness 50 along the second direction Y. The second protrusion 38 has a certain height. When the third wiring harness 50 is led out from the second opening 314, the second protrusion 38 can guide the third wiring harness 50. Optionally, the second protrusion 38 may be made of a material such as rubber or plastic, and the second protrusion 38 and the first wall 31 may also be integrally injection-molded.

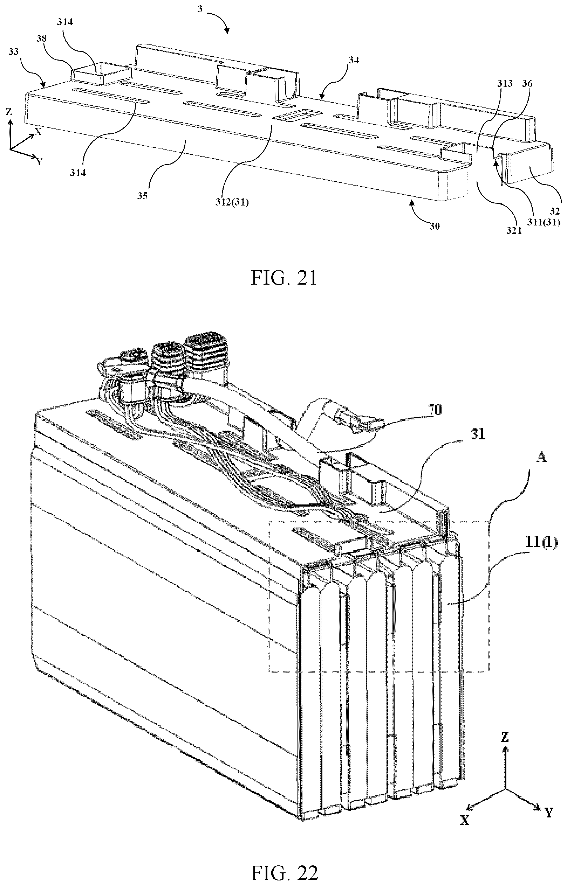

In some embodiments, as shown in FIG. 21, FIG. 21 is a structural diagram of a second structure 3 according to some embodiments of this application. The second wall 32 is provided with a third recess 321, the third recess 321 communicates with the first opening 313, and the third recess 321 extends to the first protrusion 36. As shown in FIG. 21, the opening of the third recess 321 faces the first direction Z. Further, the third recess 321 extends through the second wall 32 along the second direction Y. Further, when viewed along the first direction Z, the first opening 313 communicates with the third recess 321.

The first wiring harness 40 extends out from the first opening 313 and the first protrusion 36, and the third recess 321 provides a bending space for the first wiring harness 40, reducing the pressure of the second wall 32 and the first protrusion 36 on the first wiring harness 40. This further lowers the probability of the first wiring harness 40 disconnecting from the first conductor 4, facilitates the installation of the first wiring harness 40, and further increases the connection stability between the first wiring harness 40 and the first conductor 4.

Further, the third wall 33 is provided with a fourth recess (not shown in the figure) communicating with the second opening 314, the fourth recess extends to the second protrusion 38, and an opening of the fourth recess faces the first direction Z. Further, the fourth recess extends through the third wall 33 along the second direction Y. The third wiring harness 50 extends out from the second opening 314 and the second protrusion 38, and the fourth recess provides a bending space for the third wiring harness 50, reducing the pressure of the third wall 33 and the second protrusion 38 on the third wiring harness 50. This further lowers the probability of disconnection between the third wiring harness 50 and the second conductor 5, facilitates the installation of the third wiring harness 50, and further increases the connection stability between the third wiring harness 50 and the second conductor 5.

Further, as shown in FIG. 8, the second structure 3 further includes a first insulating element 37 covering the third recess 321. The first insulating element 37 covers the third recess 321 to limit positions of the first wiring harness 40 and the third wiring harness 50 in the second direction Y. The first insulating element 37 is further configured to restrict the insulating material, reducing the probability of the insulating material flowing out of the third recess 321. Optionally, the first insulating element 37 may be adhesive tape. Optionally, the first insulating element 37 may be acetate cloth. Moreover, when the first insulating element 37 is adhesive tape or acetate cloth, the material of the first insulating element 37 is relatively soft, reducing the wear on the first wiring harness 40 and the third wiring harness 50, and improving the service life of the first wiring harness 40 and the third wiring harness 50.

In some embodiments, the first wall 31 is provided with a first recess 317, the first recess 317 includes a third region 3171, and the third region 3171 abuts against the first structure 2. Optionally, the third region 3171 is in contact connection with the first structure 2.

In some embodiments, as shown in FIGs. 15 and 17, the first wall 31 is provided with a first recess 317, and the third region 3171 may be a bottom wall of the first recess 317. A plurality of first recesses 317 are provided on the first wall 31. In a case of injecting the first insulating material into between the first structure 2 and the first wall 31, the plurality of first recesses 317 can occupy part of the space in the accommodation cavity 30, reducing the amount of the insulating material to be injected and lowering the costs. Moreover, the plurality of first recesses 317 can restrict the flow direction of the insulating material, and accelerate the flow speed of the insulating material, allowing the first insulating material to quickly fix the first structure 2.

In some embodiments, as shown in FIG. 23, along the first direction Z, a gap 361 is present between a projection of the first protrusion 36 and a projection of the third region 3171 in the third direction X. The gap 361 reserves a channel for the insulating material, and the first insulating material can enter the gap 361 and is then cured, implementing further fixation of the first wiring harness 40. Optionally, along the third direction X, a width of the gap 361 is 1 mm to 2 mm.

In some embodiments, as shown in FIGs. 14 and 18, the battery module 10 further includes a second insulation layer 7, and the second insulation layer 7 covers the first opening 313 and the second opening 314. The second insulation layer 7 is used to seal the first opening 313 and the second opening 314. When the battery module 10 is inverted for injecting the first insulating material, the second insulation layer 7 reduces the probability of the first insulating material flowing out of the first opening 313 and the second opening 314, decreases the waste of the first insulating material, and lowers the production costs. Optionally, the second insulation layer 7 includes a sealant. Optionally, the second insulation layer 7 includes quick-drying adhesive. The battery module 10 in an inverted state may be the battery module 10 placed in a direction opposite to the first direction Z in FIG. 22.

In some embodiments, as shown in FIGs. 18, 22, and 23, FIG. 22 is another partial structural diagram of a battery module 10 according to some embodiments of this application, and FIG. 23 is an enlarged view of region A in FIG. 22. The battery module 10 further includes a detecting element 8. The detecting element 8 is fixed to a surface of the first insulation layer 6 far away from the first wall 31.

In an embodiment of this application, the detecting element 8 may be a temperature sensor used for collecting temperature of the cell 11. Arranging the temperature sensor on the first insulation layer 6 allows the first insulation layer 6 to evenly dissipate heat from the plurality of cells 11, making the collection results of the temperature sensor more accurate. Moreover, as shown in FIG. 3, the second wall 32 and/or the third wall 33 of the second structure 3 is provided with a second recess 332, and a transmission cable 81 of the detecting element 8 is led out through the second recess 332. Optionally, a thermal conductivity of the first insulation layer 6 is 0.3 w/m.k.

In some embodiments, as shown in FIGs. 22 and 23, the battery module 10 further includes a buffer element 9, and the buffer element 9 is located between adjacent cells 11 along the third direction X. Further, the buffer element 9 is located between the first components 111 of the cell housings 110 of adjacent cells 11 along the third direction X. The buffer element 9 may be foam or the like. The buffer element 9 is configured to provide a swelling space for the cell 11 when the cell 11 swells. The buffer element 9 may be further configured to provide a space for accommodating the detecting element 8.

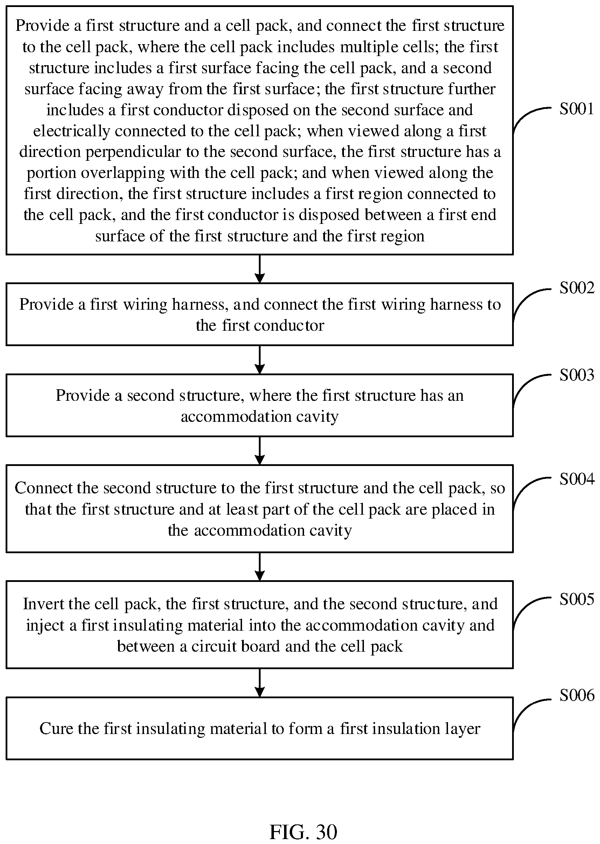

An embodiment of a second aspect of this application provides a manufacturing method of battery module. As shown in FIG. 30, FIG. 30 is a flowchart of a manufacturing method of battery module according to some embodiments of this application. The manufacturing method includes the following steps.

Step S001. Provide a first structure and a cell pack, and connect the first structure to the cell pack, where the cell pack includes a plurality of cells; the first structure includes a first surface facing the cell pack, and a second surface facing away from the first surface; the first structure further includes a first conductor disposed on the second surface and electrically connected to the cell pack; when viewed along a first direction perpendicular to the second surface, the first structure has a portion overlapping with the cell pack; and when viewed along the first direction, the first structure includes a first region connected to the cell pack, and the first conductor is disposed between a first end surface of the first structure and the first region.

Step S002: Provide a first wiring harness, and connect the first wiring harness to the first conductor.

Step S003: Provide a second structure, where the second structure has an accommodation cavity.

Step S004: Connect the second structure to the first structure and the cell pack, so that the first structure and at least part of the cell pack are placed in the accommodation cavity.

Step S005: Invert the cell pack, the first structure, and the second structure, and inject a first insulating material into the accommodation cavity and between a circuit board and the cell pack.

Step S006: Cure the first insulating material to form a first insulation layer.

In the battery module made using the manufacturing method of battery module in the embodiment of this application, the first structure is located in the accommodation cavity of the second structure, and the first conductor is located between the first region and the first end surface. After the first wiring harness is connected to the first conductor, the first wiring harness connected to the first conductor can be directly led out from a side surface of the second structure, making the lead-out path of the first wiring harness relatively short and the wiring less complex. Moreover, the first insulation layer is formed by injecting the first insulating material into the accommodation cavity and between the first structure and the cell pack and then curing the first insulating material. In the embodiment of this application, after the first wiring harness is welded to the first conductor, the first insulating material is injected into the accommodation cavity and between the first structure and the cell pack. The first insulation layer formed after the first insulating material is cured can fix the cell pack and the first structure. The first insulation layer in the accommodation cavity can further fix and connect the first wiring harness and the first conductor, enhancing the connection stability between the first wiring harness and the first structure, and reducing the probability of battery failure.

Moreover, the first insulating material is injected into the accommodation cavity of the second structure through inverted potting to fix the cell, the first structure, and the second structure, allowing the battery module to better withstand conditions such as impact, vibration, and drop, protecting the electrode terminal of the cell, and protecting the welding components on the first structure such as the first conductor. Under the action of the accommodation cavity of the second structure, coupled with inverted potting, the number of fillers used is reduced, the weight is reduced, the energy density is improved, and the cost is reduced.

In some embodiments, step S0004 includes: leading out the first wiring harness from the first opening of the second structure.

In some embodiments, the first insulating material is injected between the plurality of cells. Space can be reserved between adjacent cells, which can be used as a swelling space for the cells, and also for injecting the first insulating material between the cells. Injecting the first insulating material between the plurality of cells can improve the injection efficiency of the first insulating material and reduce the injection time.

In some embodiments, the second structure includes a first wall, a second wall and a third wall disposed along the first direction, and a fourth wall and a fifth wall disposed along the second direction, where the second wall, the third wall, the fourth wall, the fifth wall, and the first wall form the accommodation cavity, and the first wall is provided with a first opening. Before step S0005, the manufacturing method further includes:
Arranging a second insulation layer on the first opening, so that the second insulation layer covers the first opening; and after the second insulation layer is cured, inverting the cell pack, the first structure, and the second structure.

In some embodiments of this application, the second insulation layer is used to seal the first opening. When the battery module is inverted for injecting the first insulating material, the second insulation layer reduces the probability of the first insulating material flowing out of the first opening, reduces the waste of the first insulating material, and reduces the production cost. When the battery module 10 is inverted for injecting the first insulating material, the probability of the first insulating material flowing out of the first opening is reduced, the waste of the first insulating material is decreased, and the production cost is lowered.

In some embodiments, after step S0006, the method further includes: placing a detecting element between the cells, with the detecting element placed on the first insulation layer. The detecting element may be a temperature sensor used for collecting temperature of the cell. Arranging the temperature sensor on the first insulation layer allows the first insulation layer to evenly dissipate heat from the plurality of cells, making the collection results of the temperature sensor more accurate.

In some embodiments, before placing the detecting element between the cells, the method further includes: wrapping the detecting element with a thermal conductive material, so as to further improve the detection accuracy of the temperature sensor.

An embodiment of a third aspect of this application provides a battery pack 20. As shown in FIGs. 1 and 2, the battery pack 20 includes a housing 30 and the battery module 10 in some embodiments of the first aspect or a battery module obtained using the foregoing manufacturing method of battery module, where the battery module 10 is disposed in the housing 30.

In the battery module of the battery pack 20 provided in this embodiment of this application, the first conductor 4 is disposed between the first end surface 240 and the first region 230, that is, the connection end of the first wiring harness 40 is disposed between the first end surface 240 and the first region 230. Since the first end surface 240 is a side end of the first structure 3 along the second direction Y, after the first conductor 4 and the first wiring harness 40 are electrically connected to the first structure 3, they can be directly led out from the side edge of the first structure 3, reducing wiring complexity and improving service life of the battery. Moreover, placing the first conductor 4 between the first end surface 240 and the first region 230 can increase the design flexibility of the first wiring harness 40, improve the service life of the battery, and enhance the space utilization of the battery module 10.

Optionally, a material of the housing includes metal. A metal housing helps protect the battery module inside it, thus improving the reliability of the battery pack. For example, the material of the housing may be aluminum, iron, aluminum alloy, or the like, which is not limited in some embodiments of this disclosure.

An embodiment of a fourth aspect of this application provides an electric device, where the electric device includes the battery pack.

In the embodiment of this application, the electric device includes the battery pack, so the electric device has all the advantages of the battery pack described above. The battery pack is configured to provide electric energy to the electric device, and the electric device includes but is not limited to a drone, an electric vehicle, a mobile phone, a laptop, an electric toy, an electric tool, and an electric bicycle.

The above descriptions are only the preferred embodiments of this application and are not intended to limit this application.

## Claims

1. A battery module, comprising a cell pack, a first structure, and a first wiring harness; wherein
the cell pack comprises a plurality of cells;
the first structure comprises a first surface facing the cell pack, and a second surface facing opposite from the first surface; the first structure further comprises a first conductor disposed on the second surface and electrically connected to the cell pack; when viewed along a first direction perpendicular to the second surface, the first structure has a portion overlapping with the cell pack; when viewed along the first direction, the first structure comprises a first region connected to the cell pack; and the first conductor is disposed between a first end surface of the first structure and the first region; and
the first wiring harness is connected to the first conductor.

2. The battery module according to claim 1, wherein the battery module further comprises a first connector connected to the first wiring harness.

3. The battery module according to claim 2, wherein the battery module further comprises a second wiring harness, the second wiring harness is electrically connected to the cell pack; and when viewed along the first direction, the second wiring harness and the first connector are spaced apart from each other.

4. The battery module according to claim 2, wherein the first structure further comprises: a second conductor disposed on the second surface and electrically connected to the cell pack, and a third wiring harness connected to the second conductor; wherein when viewed along the first direction, the second conductor is disposed between a second end surface of the first structure and the first regionthe second end surfaceand the first end surfaceare disposed opposite to each other .

5. The battery module according to claim 4, wherein the battery module further comprises a second connector connected to the third wiring harness.

6. The battery module according to claim 5, wherein when viewed along the first direction, the second connector has a portion overlapping with the first connector in a third direction parallel to an extension direction of the first end surface.

7. The battery module according to claim 3, wherein when viewed along the first direction, in a second direction perpendicular to the first end surface, the first connector is positioned closer to the first end surface than a center of the first structure.

8. The battery module according to claim 7, wherein when viewed along the first direction, in the second direction, the first connector is positioned closer to the first end surface than a center between the center of the first structure and the first end surface.

9. The battery module according to claim 8, wherein when viewed along the first direction, the second wiring harness runs through the center of the first structure in the second direction; and the second wiring harness and the first connector are spaced apart from each other.

10. The battery module according to claim 6, wherein the battery module further comprises a second structure, the second structure comprises a third surface facing towards the second surface, and a fourth surface facing away from the third surface; the second structure comprises a first opening; wherein when viewed along the first direction, the first opening overlaps with the first conductor; and the first wiring harness extends from the first opening to the fourth surface.

11. The battery module according to claim 10, wherein the second structure comprises a second opening; when viewed along the first direction, the second opening overlaps with the second conductor, and the third wiring harness extends from the second opening to the fourth surface.

12. The battery moduleaccording to claim 3, wherein the first wiring harnesstransmits a signal from the cell pack, and the second wiring harnessconducts power from the cell pack.

13. The battery module according to claim 10, wherein the second structure has an accommodation cavity; the first structure and the cell pack are at least partially placed in the accommodation cavity; and
the battery module further comprises a first insulation layer, the first insulation layer is formed by arranging and fixing a first insulating material in the accommodation cavity, and the first insulation layer bonds and fixes the first structure to the cell pack.

14. The battery module according to claim 13, wherein the cell comprises a cell housing and an electrode terminal extending from inside of the cell housing to outside of the cell housing, and the second structure comprises a first wall disposed opposite to the first structure along the first direction; and
a part of the electrode terminal and the cell housing are located in the accommodation cavity, and the first insulation layer bonds and fixes the part of the electrode terminal and the cell housing to the first structure.

15. The battery module according to claim 14, wherein the second structure comprises the first wall, a second wall and a third wall disposed along the third direction, and a fourth wall and a fifth wall disposed along a second direction perpendicular to the third direction; wherein the second wall, the third wall, the fourth wall, the fifth wall, and the first wall form the accommodation cavity.

16. The battery module according to claim 15, wherein the cell housing comprises a first component for accommodating the electrode assembly and a second component extending outward from the first component, wherein the electrode terminal extends out of the cell housing from the second component.

17. The battery module according to claim 16, wherein the first structure is provided with a plurality of first through holes; when viewed along the first direction, a projection of the first opening at least partially overlaps with a projection of at least one of the first through holes.

18. The battery module according to claim 15, wherein the second structure further comprises a first protrusion, the first protrusion is disposed on a side of the first wall far away from the cell pack, and the first protrusion surrounds the first opening.

19. The battery module according to claim 18, wherein the second wall is provided with a third recess, the third recess communicates with the first opening, the third recess extends to the first protrusion, and the second structure further comprises an insulating element covering the third recess.

20. The battery module according to claim 18, wherein the first wall is provided with a first recess, the first recess comprises a third region, and the third region abuts against the first structure.

21. The battery module according to claim 20, wherein along the first direction, a gap is present between a projection of the first protrusion and a projection of the third region in the third direction.

22. The battery module according to claim 11, wherein the battery module further comprises a second insulation layer, and the second insulation layer covers the first opening and the second opening.

23. The battery module according to claim 17, wherein the first insulation layer comprises a first portion, and the first portion is located between the second components.

24. The battery module according to claim 14, wherein the battery module further comprises a detecting element, and the detecting element is fixed to a surface of the first insulation layer far away from the first wall.

25. The battery module according to any one of claims 1 to 6, wherein the first structure is provided with a plurality of first through holes; an electrode terminal of the cell runs through the first through hole and is disposed on the second surface; and the first region comprises a second region surrounded by the plurality of first through holes.

26. The battery module according to any one of claims 1 to 6, wherein the first structure is provided with a first notch and a plurality of first through holes; an electrode terminal of the cell runs through the first through hole and the first notch, and is disposed on the second surface; and the first notch and the plurality of first through holes form the first region.

27. A manufacturing method of battery module, wherein the manufacturing method comprises:
providing a first structure and a cell pack, and connecting the first structure to the cell pack, wherein the cell pack comprises a plurality of cells; the first structure comprises a first surface facing the cell pack, and a second surface facing away from the first surface; the first structure further comprises a first conductor disposed on the second surface and electrically connected to the cell pack; when viewed along a first direction perpendicular to the second surface, the first structure has a portion overlapping with the cell pack; and when viewed along the first direction, the first structure comprises a first region connected to the cell pack, and the first conductor is disposed between a first end surface of the first structure and the first region;
providing a first wiring harness, and connecting the first wiring harness to the first conductor;
providing a second structure, wherein the second structure has an accommodation cavity;
connecting the second structure to the first structure and the cell pack, so that the first structure and the cell pack are at least partially placed in the accommodation cavity;
inverting the cell pack, the first structure, and the second structure, and injecting a first insulating material into the accommodation cavity and between the first structure and the cell pack; and
curing the first insulating material to form a first insulation layer.

28. The manufacturing method of battery module according to claim 27, wherein after the curing the first insulating material to form a first insulation layer, the method further comprises:
placing a detecting element between the cells, with the detecting element placed on the first insulation layer.

29. The manufacturing method of battery module according to claim 28, wherein before the placing a detecting element between the cells, the method further comprises:
wrapping the detecting element with a thermal conductive material.

30. A battery pack, comprising a housing and the battery module according to claim any one of claims 1 to 26 or a battery module obtained using the manufacturing method of battery module according to any one of claims 27 to 29, wherein the battery module is placed in the housing.

31. An electric device, wherein the electric device comprises the battery pack according to claim 30.
